# EUROPEAN PATENT APPLICATION

(11) **EP 4 831 930 A1**
(43) Date of publication of application: **28.10.2026**
(21) Application number: 24906255.5
(22) Date of filing: 13.12.2024
(51) Int. Cl.: G06V 10/20

(54) **MACHINE VISION-ORIENTED IMAGE PREPROCESSING METHOD AND APPARATUS, DEVICE, AND STORAGE MEDIUM**

(30) Priority: 19.12.2023 CN 202311750184
(71) Applicant: Advanced Institute of Information Technology (AIIT), Peking University, Hangzhou, Zhejiang 311200 (CN); Peking University, Beijing 100871 (CN)
(72) Inventor: MA, Siwei, Hangzhou, Zhejiang 311200 (CN); JIANG, Yun, Hangzhou, Zhejiang 311200 (CN); TENG, Bo, Hangzhou, Zhejiang 311200 (CN); HUANG, Zhimeng, Hangzhou, Zhejiang 311200 (CN); GAO, Wen, Hangzhou, Zhejiang 311200 (CN)
(74) Representative: Grünecker Patent- und Rechtsanwälte PartG mbB
(86) International application number: PCT/CN2024/139136
(87) International publication number: WO 2025/130774

(57) **Abstract**

A machine vision-oriented image preprocessing method, comprising: performing blur processing on an original image to generate an image to be enhanced, wherein the sharpness of the image to be enhanced is lower than that of the original image; performing enhancement processing on a semantic feature of the image to be enhanced to generate a target image; and inputting the target image into an image processing neural network to trigger the image processing neural network to execute an image analysis task on the basis of a semantic feature of the target image. According to the image preprocessing method, the analysis performance of the image processing neural network can be maintained at a better level under the condition that the bitrate is reduced.

## Description

### Technical Field

The present application belongs to the technical field of image processing, and specifically relates to an image preprocessing method, apparatus, device, and storage medium for machine vision.

### Background

Image analysis tasks for machine vision (also referred to as computer vision) may include tasks such as image segmentation and image matching based on neural networks. The data volume of an original image is generally large and contains some image data that is not closely related to the image analysis task. In some embodiments, in order to reduce data processing volume and save resources, the original image may be preprocessed, and the preprocessed image is input into a neural network, so that the neural network executes a corresponding image analysis task. The quality of the preprocessed image has a decisive influence on the analytical performance of the neural network.

However, currently existing image preprocessing techniques mostly process aspects such as color and brightness of image pixels, and are not suitable for image analysis task scenarios for machine vision. Other image processing techniques, when applied to image analysis tasks for machine vision, lead to problems such as low analytical performance. Based on this, a preprocessing method that is suitable for image analysis tasks for machine vision and in which the preprocessed image can improve analytical performance is needed in the art.

### Summary

The present application proposes an image preprocessing method, apparatus, device, and storage medium for machine vision, which is suitable for image preprocessing of image analysis tasks for machine vision and makes the preprocessed image beneficial to improving analytical performance.

Embodiments of the first aspect of the present application propose an image preprocessing method for machine vision, comprising:
performing blur processing on an original image to generate an image to be enhanced, wherein the sharpness of the image to be enhanced is lower than that of the original image;
performing enhancement processing on semantic features of the image to be enhanced to generate a target image; and
inputting the target image into an image processing neural network to trigger the image processing neural network to execute an image analysis task based on the semantic features of the target image.

Embodiments of the second aspect of the present application provide an image preprocessing apparatus, comprising:
a blur processing module, configured to perform blur processing on an original image to generate an image to be enhanced, wherein the sharpness of the image to be enhanced is lower than that of the original image;
an enhancement module, configured to perform enhancement processing on semantic features of the image to be enhanced to generate a target image; and
an input module, configured to input the target image into an image processing neural network to trigger the image processing neural network to execute an image analysis task based on the semantic features of the target image.

Embodiments of the third aspect of the present application provide a computer device, comprising a memory, a processor, and a computer program stored in the memory and executable on the processor, wherein the processor executes the computer program to implement the method according to the first aspect.

Embodiments of the fourth aspect of the present application provide a computer-readable storage medium having a computer program stored thereon, wherein the program, when executed by a processor, implements the method according to the first aspect.

The technical solutions provided in the embodiments of the present application have at least the following technical effects or advantages:
In the embodiments of the present application, blur processing can be first performed on an original image to generate an image to be enhanced, wherein the sharpness of the image to be enhanced is lower than that of the original image. In this way, by reducing the sharpness of the original image, the bit rate of the original image is reduced. Further, enhancement processing is performed on semantic features of the image to be enhanced to generate a target image, and the target image is input into an image processing neural network to trigger the image processing neural network to execute an image analysis task based on the semantic features of the target image. Herein, the semantic features may be feature data for the image processing neural network to execute the image analysis task. Compared with traditional image preprocessing performed from the perspective of color and brightness of various pixels of an image, the technical solutions of the embodiments of the present application achieve the effect of reducing the bit rate of the original image on the basis of not reducing the intensity of the semantic features of the original image by comprehensively reducing the sharpness of the original image and then enhancing the semantic feature part in the image in a targeted manner, which is beneficial to reducing the amount of computation and saving costs. Moreover, compared with traditional image preprocessing performed from the perspective of color and brightness of various pixels of an image, the technical solutions of the embodiments of the present application perform preprocessing oriented to the semantic feature aspect of the image, so that the target image can be used as an input image of the image processing neural network, and it is beneficial to maintaining the analytical performance of the image processing neural network at a preferable level.

Additional aspects and advantages of the present application will be set forth in part in the following description, and in part will become apparent from the following description, or may be learned through practice of the present application.

### Brief Description of The Drawmings

By reading the detailed description of the preferred embodiments below, various other advantages and benefits will become clear to those of ordinary skill in the art. The drawings are only for the purpose of illustrating the preferred embodiments and are not to be considered as a limitation to the present application. Moreover, throughout the drawings, the same reference symbols are used to denote the same components. In the drawings:
FIG. 1 shows a schematic block diagram of a CV-oriented analysis system provided by an embodiment of the present application;
FIG. 2 shows a scene schematic diagram of an image preprocessing method for machine vision provided by an embodiment of the present application;
FIG. 3 shows a method flowchart of an image preprocessing method for machine vision provided by an embodiment of the present application;
FIG. 4A shows a data flow schematic diagram of an image preprocessing method for machine vision provided by an embodiment of the present application;
FIG. 4B shows another data flow schematic diagram of an image preprocessing method for machine vision provided by an embodiment of the present application;
FIG. 5 shows an architectural schematic diagram of an image preprocessing network training system provided by an embodiment of the present application;
FIG. 6a and FIG. 6b show effect comparison schematic diagrams of image preprocessing provided by an embodiment of the present application;
FIG. 7 shows a structural schematic diagram of a computer device provided by an embodiment of the present application.

### Detailed Description of Embodiments

The technical solutions in the embodiments of the present application will be described below with reference to the accompanying drawings in the embodiments of the present application.

The terms used in the following embodiments of the present application are for the purpose of describing specific embodiments only and are not intended to be limiting of the technical solutions of the present application. As used in the specification and appended claims of the present application, the singular forms "a," "an," "the," "above," "this," and "the one" are intended to include the plural forms as well, unless the context clearly indicates otherwise. It should also be understood that although the terms first, second, etc. may be used in the following embodiments to describe a certain type of object, the object should not be limited to these terms. These terms are only used to distinguish specific implementation objects of that type of object. For example, the terms first, second, etc. are used in the following embodiments to describe semantic features, but the semantic features are not limited to these terms. These terms are only used to distinguish semantic features of different images. The same applies to other types of objects that may be described using the terms first, second, etc. in the following embodiments, and details are not repeated here.

Relevant technologies involved in the embodiments of the present application are introduced below.

The embodiments of the present application relate to the technical field of image processing and disclose a method for preprocessing an image based on Artificial Intelligence (AI) so that the preprocessed image supports image analysis tasks oriented to Computer Vision (CV).

AI is a theory, method, technology, and application system that uses digital computers or machines controlled by digital computers to simulate, extend, and expand human intelligence, perceive the environment, acquire knowledge, and use knowledge to obtain the best results. AI software technology mainly includes several major directions such as Computer Vision (CV) technology, Speech Technology, Natural Language Processing (NLP) technology, and Machine Learning (ML)/deep learning.

The technical solutions of the present application mainly relate to CV technology. CV technology is a science that studies how to make machines "see." More specifically, it refers to using cameras and computers to replace human eyes to perform machine vision tasks such as identification, tracking, and measurement of targets, and further performing graphics processing to make computer-processed images more suitable for human observation or transmission to instruments for detection. CV technology usually includes image processing (including image encryption, etc.), image recognition, image semantic understanding, image retrieval, OCR, video processing, video semantic understanding, video content/behavior recognition, three-dimensional object reconstruction, 3D technology, virtual reality, augmented reality, simultaneous localization and mapping, and also includes common biometric recognition technologies such as face recognition. Image analysis tasks based on CV involved in the embodiments of the present application include, for example, at least one of: image matching, image recognition, image segmentation, image content extraction, and face recognition.

Taking the image analysis task based on CV being image content extraction as an example, the CV network can extract a target object (e.g., a target face, a target lesion site, a target vehicle, etc.) contained in the input image through a series of processes such as encoding and feature extraction, and then perform other applications based on the extracted target object. Taking target vehicle extraction as an example, the extraction ratio of all target vehicles contained in the input image by the CV network, and the accuracy with which the extracted vehicle is the target vehicle, indicate the analytical performance of the CV network. Illustratively, the higher the extraction ratio of all target vehicles by the CV network and the higher the accuracy with which the extracted vehicle is the target vehicle, the better the analytical performance of the CV network can be indicated; conversely, the analytical performance of the CV network can be indicated as relatively poor.

It should be understood that in the case where the image analysis task based on CV is other image analysis tasks, the indication of the analytical performance of the CV network can be reflected by the degree to which the analysis result of the CV network expresses the target object to be analyzed, which will not be elaborated here.

In existing CV processing processes, after encoding the original image, it is convenient to transmit and analyze the image data. However, the original image is generally a high-bit-rate image such as a lossless image, and the computing power of most CV processing devices may be limited, which may lead to reduced sharpness or even distortion of the encoded image, thereby reducing the analytical performance of the CV analysis network. To reduce the data processing volume of the CV network, the original image can be preprocessed, and the preprocessed image is input into the CV network. However, traditional image preprocessing is based on the red, green, and blue (RGB) three-component information of image pixels, performing image graying and geometric transformation processing to obtain a preprocessed image. That is, traditional image preprocessing processes from the perspective of grayscale and brightness of pixels in the image, without involving the processing and understanding of semantic features contained in the image. Since CV technology, as a deep learning technology, processes images oriented to the perspective of semantic features represented by the distribution of image pixels, traditional image preprocessing cannot be applied to image analysis tasks oriented to CV.

In view of this, an embodiment of the present application provides an image preprocessing technology oriented to CV. First, blur processing is performed on an original image, thereby reducing the bit rate of the original image by reducing the sharpness of the original image. Furthermore, enhancement processing is performed on the semantic features of the image to be enhanced obtained after the blur processing, so that the intensity of the semantic features of the enhanced processed image is greater than or equal to the intensity of the semantic features of the original image. In this way, on the basis of not reducing the intensity of the semantic features of the original image, the effect of reducing the bit rate is achieved by reducing the bit rate of the content in the original image that is weakly correlated with the image analysis task. Moreover, the above processing process is not limited to the narrow aspect of grayscale of pixels in the image, but is performed oriented to the semantic feature aspect of the image, so that the enhanced processed image can be used as an input image of the image processing neural network, enabling the image processing neural network to execute the image analysis task based on the semantic features, which is beneficial to maintaining the analytical performance of the image processing neural network at a preferable level.

The technical scenarios and system architecture involved in the embodiments of the present application are introduced below.

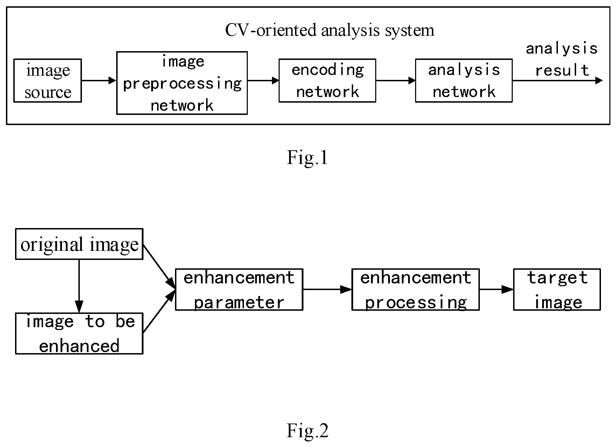

Referring to FIG. 1, FIG. 1 shows a schematic block diagram of a CV-oriented analysis system provided by an embodiment of the present application. As shown in FIG. 1, the CV-oriented analysis system may include an image source 11, an image preprocessing network 12, an encoding network 13, and an analysis network 14. In specific implementation forms, the image source 11, the image preprocessing network 12, the encoding network 13, and the analysis network 14 can be implemented as hardware components, software components, or components combining hardware and software. Among them, the image preprocessing network 12, the encoding network 13, and the analysis network 14 may be algorithm networks based on deep learning. The encoding network 13 and the analysis network 14 can be used to form the above-mentioned CV network. They are described respectively as follows:

The image source 11 can be used to provide an original image for the CV-oriented analysis system, and may include or may be any type of image capture device, for example, for capturing real-world images, images of real objects, and/or any type of images. The image source 11 may be a camera for capturing images or a memory for storing images. When the image source 11 is a camera, the image source 11 may, for example, be a local or integrated camera integrated in a source device; when the image source 11 is a memory, the image source 11 may be a local or, for example, an integrated memory integrated in the source device.

The image preprocessing network 12 can be used to preprocess the original image from the image source 11, so as to reduce the bit rate of the image as much as possible while effectively maintaining the analysis performance of the content to be analyzed. In the embodiment of the present application, the image preprocessing network 12 can reduce the amount of data with low correlation to the content to be analyzed in the original image, and maintain or enhance the part representing the content to be analyzed in the original image. For example, the preprocessing executed by the image preprocessing network 12 may include blur processing and targeted enhancement processing of the image after blur processing.

In one embodiment, the image preprocessing network 12 may include algorithm modules and deep learning-based image processing networks or models. These algorithm modules, deep learning-based image processing networks, or models can implement the image preprocessing method for machine vision of the embodiment of the present application through different combinations. For example, degradation algorithms, U-shaped skip connection (U-net) networks, etc.

In this way, the mode and principle of image preprocessing by the image preprocessing network 12 match the CV technology, so that the image preprocessing network 12 can be applied to the CV analysis system. Moreover, the preprocessed image output by the image preprocessing network 12 can be directly used for the image analysis task of the CV network.

The encoding network 13 can be used to receive the image preprocessed by the image preprocessing network 12 and process the preprocessed image using a preset operation module of the encoding network 13, thereby providing image data containing semantic features of the original image. In some embodiments, the encoding network 13 can be implemented as a fully neural network.

The analysis network 14 can be used to execute an image analysis task on the encoded data image and output an analysis result. The analysis network 14 may be a neural network for executing at least one image analysis task such as image matching, image recognition, image segmentation, image content extraction, and face recognition. The analysis result output by the analysis network 14 can be implemented as prediction results such as probability distributions and confidence parameters, which can indicate the degree of understanding of the semantic features in the original image by the analysis network 14.

It should be understood that although the image preprocessing network 12 is integrated in the CV-oriented analysis system in FIG. 1, in device embodiments, the image preprocessing network 12 can be deployed in an exemplary CV-oriented analysis system and coupled with other functional components in the CV-oriented analysis system; the functions of the image preprocessing network 12 can also be integrated in an independent computer device, so that the computer device has the image preprocessing function of the embodiment of the present application, and the computer device can be used in different CV analysis application scenarios.

In this way, the image preprocessing method for machine vision of the embodiment of the present application can be flexibly applied to CV image analysis tasks in different usage scenarios, and it is not necessary to change the basic CV network structure in any application scenario, resulting in good scalability.

The image preprocessing method, apparatus, device, and storage medium for machine vision according to the embodiments of the present application are introduced below in conjunction with the foregoing embodiments.

First, an image preprocessing method for machine vision is provided in the embodiments of the present application. The image preprocessing method for machine vision can be used in the CV-oriented analysis system illustrated in FIG. 1, and the execution subject of the image preprocessing method for machine vision can be the image preprocessing network 12 in FIG. 1. The image preprocessing network 12 in FIG. 1 may be configured to:
perform blur processing on an original image to generate an image to be enhanced, wherein the sharpness of the image to be enhanced is lower than the sharpness of the original image;
perform enhancement processing on semantic features of the image to be enhanced to generate a target image; and
input the target image into an image processing neural network to trigger the image processing neural network to execute an image analysis task based on the semantic features of the target image.

Herein, the intensity of the semantic features of the target image may be greater than or equal to the intensity of the semantic features of the original image. The image processing neural network can be implemented as the analysis network 14 in FIG. 1.

In some embodiments, as shown in FIG. 2, in order to make the intensity of the semantic features of the target image not less than the intensity of the semantic features of the original image, after obtaining the image to be enhanced, the image preprocessing network 12 can generate an enhancement parameter according to the original image and the image to be enhanced, and further, perform enhancement processing on the image to be enhanced according to the enhancement parameter to generate the target image.

The specific processing processes related to the image preprocessing method for machine vision are described below with reference to examples.

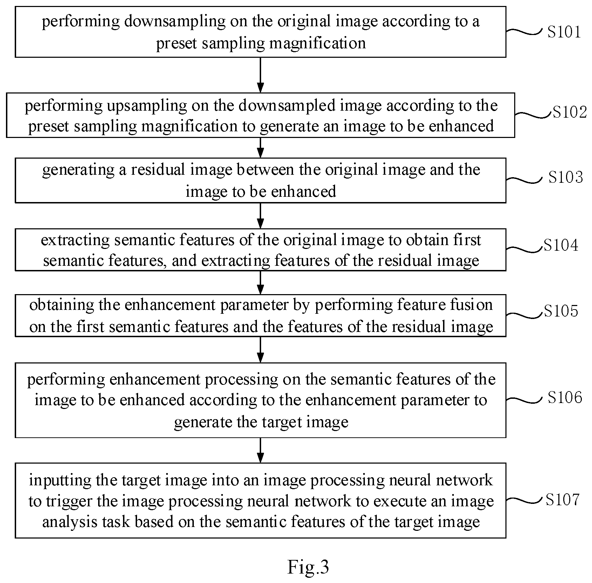

As shown in FIG. 3, FIG. 3 illustrates an exemplary image preprocessing method for machine vision according to an embodiment of the present application. The image preprocessing method for machine vision specifically includes the following steps:
Step S101, performing downsampling on the original image according to a preset sampling magnification.

In some embodiments, the original image may be an image from the image source 11 in FIG. 1. The original image may contain a target object to be analyzed by the analysis network 14 in FIG. 1. The target object, for example, may include an image of the target object to be analyzed, and the target object to be analyzed may include, for example, a target item, a target face, a target building, etc., which is not limited here.

Exemplarily, the preset sampling magnification may be related to the resolution of the original image. For example, when a resolution in at least one direction of a width and a height of the original image is greater than or equal to a preset value, the preset sampling magnification is set as a first preset sampling magnification; when the resolution in both the width direction and the height direction of the original image is less than the preset value, the preset sampling magnification is set as a second preset sampling magnification. Here, the first preset sampling magnification is greater than the second preset sampling magnification.

For example, if the resolution in at least one direction of the width and the height of the original image is greater than or equal to 1080 pixels (pixel, P), the preset sampling magnification can be set to 8; if the resolution in both the width and the height of the original image is less than 1080P, the preset sampling magnification can be set to 4.

Step S102, performing upsampling on the downsampled image according to the preset sampling magnification to generate an image to be enhanced.

Herein, the resolution of the image to be enhanced may be the same as the resolution of the original image.

It should be noted that Step S101 and Step S102 are exemplary implementation processes for performing degradation processing on the original image. In Step S102, the upsampled image can also be referred to as an image obtained by degradation processing, that is, the blurred image.

It should be understood that degradation processing is only one exemplary processing mode for performing blur processing on the original image and does not constitute a limitation on the blur processing of the embodiments of the present application. In the embodiments of the present application, blur processing can also be performed on the original image by any one of the following modes: adding noise to the original image, and performing blur processing on the original image using an image blur algorithm.

In some embodiments, if an image blur algorithm is used to perform blur processing on the original image, any one of the following blur algorithms can be used: Gaussian Blur, Box Blur, Kawase Blur, Dual Blur, Bokeh Blur, Tilt Shift Blur, Iris Blur, Grainy Blur, Radial Blur, Directional Blur, etc.

It can be seen that, by adopting this implementation mode, the blur processing of the original image is not limited to the perspective of the grayscale of pixels in the image, but is performed on the overall distribution of the image in an indiscriminate blur processing manner. In this way, on the basis of reducing the bit rate of the original image, it is beneficial to maintaining the integrity of the semantic features in the original image, thereby being beneficial to improving the analytical performance of the CV network.

Step S103, generating a residual image between the original image and the image to be enhanced.

Step S104, extracting semantic features of the original image to obtain first semantic features, and extracting features of the residual image.

Step S105, obtaining the enhancement parameter by performing feature fusion on the first semantic features and the features of the residual image.

Herein, the enhancement parameter is used to indicate an enhancement degree for the image to be enhanced. In particular, it is used to indicate an enhancement degree for the semantic feature part in the image to be enhanced.

Step S106, performing enhancement processing on the semantic features of the image to be enhanced according to the enhancement parameter to generate the target image.

It should be noted that the semantic features of the target image may refer to features of the target object to be analyzed by the image processing neural network. The intensity of the semantic features may include the number of dimensions of the features of the target object, the number of feature values contained in the features of each dimension, the size of the receptive field corresponding to the features of each dimension, etc.

Herein, the dimensions of the semantic features may include a visual dimension, an object dimension, and a conceptual dimension. The features of the visual dimension may include features such as color, texture, and shape of the target object; the object dimension may include attribute features of the target object (e.g., animal, plant, landscape), etc.; the conceptual dimension can indicate the meaning expressed by the target object. For example, the target object includes a beach, blue sky, seawater, etc. The features of the visual dimension may include features such as the contour, color, texture, and shape of each part of the beach, blue sky, and seawater; the features of the object dimension include attribute features of each part of sand, blue sky, and seawater; and the features of the conceptual dimension can indicate the beach.

In some embodiments, the more feature dimensions the semantic features contain, the more feature values the features of each dimension contain, and the smaller the receptive field corresponding to the features of each dimension, the greater the intensity of the semantic features can be considered; conversely, the smaller the intensity of the semantic features can be considered.

In combination with the foregoing description of the blur processing process of the original image, it can be known that the image to be enhanced is obtained by overall indiscriminate blurring processing of the original image, that is, the sharpness of both the target object contained in the image to be enhanced and other content outside the target object is reduced. In order to improve the analytical performance of the image processing neural network while reducing the data processing volume of the image processing neural network, in one embodiment of the present application, targeted enhancement can be performed on the target object in the image to be enhanced in the image preprocessing stage to increase the intensity of the semantic features.

Step S107, inputting the target image into the image processing neural network to trigger the image processing neural network to execute an image analysis task based on the semantic features of the target image.

Further, the image processing neural network can execute the image analysis task on the target image based on the semantic features of the target image. For example, if the image analysis task is image segmentation, the image processing neural network can determine the target object to be segmented in the target image by processing the semantic features, and then separate the target object from the target image.

In summary, it can be seen that the technical solutions of the embodiments of the present application reduce the bit rate of the original image by comprehensively reducing the sharpness of the original image. Then, the semantic feature part in the image is enhanced in a targeted manner, thereby achieving the effect of reducing the bit rate of the original image on the basis of not reducing the intensity of the semantic features of the original image, which is beneficial to reducing the amount of computation and saving costs. Moreover, preprocessing is performed oriented to the semantic feature aspect of the image, thereby being beneficial to maintaining the analytical performance of the image processing neural network at a preferable level.

It should be noted that Step S101 and Step S102 are exemplary implementation processes for performing degradation processing on the original image. In Step S102, the upsampled image can also be referred to as an image obtained by degradation processing, that is, the blurred image.

It should be understood that Step S103 to Step S105 are only one exemplary processing mode for calculating the enhancement parameter and do not constitute a limitation on the enhancement processing of the embodiments of the present application. In other embodiments of the present application, the image preprocessing network can also calculate the enhancement parameter according to other methods. For example, the enhancement parameter can be determined according to the semantic features of the original image and the semantic features of the image to be enhanced.

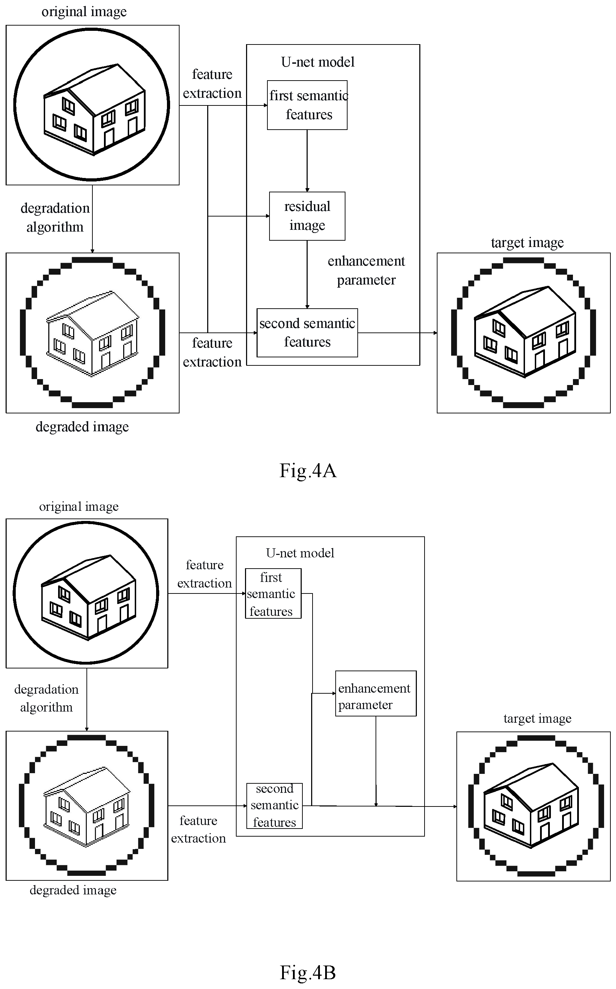

Exemplarily, the image preprocessing network can extract the semantic features of the original image to obtain first semantic features, and extract the semantic features of the image to be enhanced to obtain second semantic features. In combination with the foregoing description of semantic features, it can be known that the first semantic features and the second semantic features each contain features of at least two dimensions. Any semantic feature, for example, may include features of a visual dimension, features of an object dimension, and features of a conceptual dimension. Further, for the features of each dimension, the image preprocessing network can calculate a difference value between the features of the dimension in the first semantic features and the features of the dimension in the second semantic features to obtain at least two difference values, and then calculate the enhancement parameter according to the at least two difference values (as shown in the embodiment illustrated in FIG. 4B).

It should be noted that the features of each dimension may contain multiple feature values, and the number of feature values contained in the features of the dimension can be determined according to the setting of the enhancement algorithm.

Further, in some embodiments, the difference value corresponding to the features of the dimension may be a difference value between an average value corresponding to the first semantic features and an average value corresponding to the second semantic features. The average value corresponding to the first semantic features refers to an average value of the feature values of the dimension in the first semantic features, and the average value corresponding to the second semantic features refers to an average value of the feature values of the dimension in the second semantic features.

In other embodiments, the difference value corresponding to the features of the dimension may be a variance between the feature values of the dimension in the first semantic features and the feature values of the dimension in the second semantic features.

After obtaining at least two difference values, for each difference value, the image preprocessing network can multiply the difference value by a weight assigned to the difference value, wherein the multiplication result is an enhancement factor corresponding to the difference value, so as to obtain at least two enhancement factors, and then calculate a sum of the at least two enhancement factors, wherein the sum is the enhancement parameter.

In some embodiments, the weight may be preset. The weight is used to indicate an enhancement degree for the features of the dimension corresponding to the corresponding difference value. Taking the semantic features including features of a visual dimension, features of an object dimension, and features of a conceptual dimension as an example, the weight corresponding to the features of the visual dimension is, for example, 0.15, the weight corresponding to the features of the object dimension is, for example, 0.35, and the weight corresponding to the features of the conceptual dimension is, for example, 0.5. It can be indicated that the enhancement degree for the features of the visual dimension is relatively the weakest, the enhancement degree for the features of the object dimension is relatively moderate, and the enhancement degree for the features of the conceptual dimension is relatively the strongest.

It should be noted that the image preprocessing network can use a U-net model to extract the first semantic features of the original image, and enhance the second semantic features of the image to be enhanced according to the enhancement parameter.

In some embodiments, the image preprocessing network can extract global semantic features of the original image. The global features include image features of the target object and image features of non-target objects in the original image. Further, the image preprocessing network can perform at least one dimensionality reduction process on the global semantic features to obtain initial image features of the target object. The initial image features are subjected to at least one dimensionality increase process to obtain the first semantic features.

Herein, any one dimensionality reduction process may be downsampling of features. Exemplarily, downsampling can be performed through convolution operations and pooling.

In some embodiments, the global semantic features include image features of the target object and image features of non-target objects in the original image, and the importance of the image features of the target object in the global semantic features is relatively not prominent. Through gradual dimensionality reduction, more compact semantic information in the original image can be obtained, thereby being beneficial to strengthening the importance of the image features of the target object.

Exemplarily, the number of times of the dimensionality increase process and the number of times of the dimensionality reduction process can be the same. Any one dimensionality increase process may be upsampling of features.

Specifically, the image preprocessing network can perform upsampling on the initial image features, and concatenate the upsampled features with dimensionality-reduced features of the same size, wherein the dimensionality-reduced features of the same size refer to features of the same size as the upsampled features obtained during the at least one dimensionality reduction process. When a size of the concatenated features is identical to a size of the global semantic features, the concatenated features are designated as the first semantic features. When the size of the concatenated features is smaller than the size of the global semantic features, the concatenated features are designated as new initial image features, and upsampling is performed on the new initial image features.

For example, the size of the global semantic features of the original image is 224*224. The U-net model can perform three convolution operations and pooling operations on the global semantic features. After the first convolution operation and pooling operation, for example, the obtained dimensionality-reduced features have a size of 112*112; after the second convolution operation and pooling operation, for example, the obtained dimensionality-reduced features have a size of 56*56; after the third convolution operation and pooling operation, for example, the obtained dimensionality-reduced features have a size of 28*28. The features with a size of 28*28 can be regarded as, for example, the initial image features of the target object. Further, upsampling is performed on the features with a size of 28*28 to obtain upsampled features with a size of 56*56. The upsampled features are concatenated with the features with a size of 56*56 obtained after dimensionality reduction. After a convolution operation is performed on the concatenated features, upsampling is performed again to obtain upsampled features with a size of 112*112. The upsampled features are concatenated with the features with a size of 112*112 obtained after dimensionality reduction. After a convolution operation is performed on the concatenated features, upsampling is performed for the third time to obtain upsampled features with a size of 224*224. The upsampled features are concatenated with the features with a size of 224*224 obtained after dimensionality reduction, and a convolution operation is performed on the concatenated features. The obtained features with a size of 224*224 are the first semantic features of the original image.

In this way, performing dimensionality increase step by step on the features that highlight the importance of the image features of the target object is beneficial to gradually improving the detail features of the target object, so that the obtained first semantic features can accurately and completely represent the semantics of the target image. Further, the enhancement parameter obtained based on the first semantic features has relatively strong reliability.

The image preprocessing method for machine vision of the embodiment of the present application is introduced below in conjunction with an example, taking the image preprocessing network including a degradation module and a U-net model as an example.

Exemplarily, as shown in FIG. 4A and FIG. 4B, the original image includes, for example, an image of a circular area and an image of a house. The image of the circular area may be, for example, grassland (not shown in the figure), and the display effect of the image of the circular area is the same as the similar effect of the rings in the figure, which will not be further illustrated in the accompanying drawings. The image of the circular area is the background of the image of the house, and the image of the house covers part of the image of the circular area and is displayed at the forefront of the original image. The image of the house is, for example, the target object to be analyzed by the image processing neural network.

Referring to FIG. 4A, FIG. 4A shows an exemplary data flow diagram of the image preprocessing method for machine vision. In this example, after receiving the original image, the image preprocessing network can call a pre-deployed degradation module to perform blur processing by degrading the original image to obtain a degraded image (i.e., the aforementioned image to be enhanced).

For example, if the width of the original image is greater than 1080p, the degradation module can select a sampling magnification of 8, first perform 8× downsampling on the original image, and then perform 8× upsampling on the downsampled image. The resolution of the upsampled image is, for example, the same as the resolution of the original image.

Referring again to FIG. 4A, both the image of the circular area and the image of the house in the original image have relatively high sharpness, which can be specifically presented as the lines of the contours of the image of the circular area and the image of the house being relatively fine. The sharpness of the image of the circular area and the image of the house in the degraded image is relatively low, which can be specifically presented as the contours of the image of the circular area and the image of the house both showing a grainy feel of pixels.

Further, the degradation module can generate a residual image between the original image and the degraded image, and input the original image, the residual image, and the degraded image all into the U-net model. The image preprocessing network can call the U-net model to enhance the degraded image to obtain a preprocessed image (i.e., the aforementioned target image).

Exemplarily, the U-net model can extract first semantic features from the original image. In this example, the first semantic features may refer to features indicating the image of the house in the original image.

For example, the U-net model can first extract global semantic features of the original image, and the global semantic features may include features of the circular area and features of the house. Afterwards, the U-net model can, for example, perform three dimensionality reduction processes on the global semantic features successively, and each dimensionality reduction process achieves the effect of downsampling through convolution operations and pooling. For details, reference can be made to the exemplary description of dimensionality reduction mentioned above, which will not be repeated here. Among the features obtained after the three dimensionality reduction processes, the intensity of the house features is greater than the intensity of the circular area features, and the weight of the house features can also be greater than the weight of the circular area features. The weight here can be used to indicate the importance of the features. Then, the features obtained after the three dimensionality reduction processes can be taken as the initial image features of the house. Further, three dimensionality increase processes are performed on the initial image features of the house successively, and the features obtained after the three dimensionality increase processes are the first semantic features of the original image.

As mentioned above, in the initial image features of the house, the intensity and importance of the house features are relatively large. Then, during the dimensionality increase process, most of the enriched and detailed features are also features of the house. It can be considered that the first semantic features are the final image features of the house.

The residual image can indicate the degree of difference between the degraded image and the original image. Then, the U-net model can extract features of the residual image, and perform feature fusion on the first semantic features and the features of the residual image. The fused result can be an enhancement parameter, which indicates the enhancement degree for the degraded image.

The U-net model can extract second semantic features of the degraded image. The second semantic features may refer to the features of the house in the degraded image. Afterwards, the U-net model can enhance the second semantic features according to the enhancement parameter to obtain the target image. Exemplarily, the U-net model can output the enhanced semantic features by performing a series of convolution operations on the enhancement parameter and the second semantic features. These semantic features can be presented as feature values between 0 and 1. The larger the feature value, the greater the semantic intensity can be indicated.

Referring again to FIG. 4A, the sharpness of the image of the house in the target image is relatively high, while the contour of the image of the circular area still shows a grainy feel of pixels. It can be seen that, compared with the original image, in the target image obtained after preprocessing, the bit rate of the area with less relevance to the image analysis task is reduced, while the intensity of the semantic features of the area with greater relevance to the image analysis task remains unchanged. In this way, after the target image is input into the CV network, it is beneficial to reducing the amount of computation on the basis of effectively maintaining the analytical performance of the CV network.

It should be understood that FIG. 4A is an exemplary implementation mode of the image preprocessing of the present application and does not constitute a limitation on the image preprocessing method for machine vision of the embodiment of the present application. In other implementation modes, the image preprocessing network can also use other methods to enhance the semantic features of the house. Exemplarily, refer to another exemplary image preprocessing method for machine vision shown in FIG. 4B.

As shown in FIG. 4B, in this example, after receiving the original image, the image preprocessing network also calls the degradation module to perform blur processing by degrading the original image to obtain a degraded image. For this implementation process, reference can be made to the description of the embodiment illustrated in FIG. 4A, which will not be repeated here.

Different from FIG. 4A, in this example, after obtaining the degraded image, the degradation module no longer generates a residual image, but inputs both the original image and the degraded image into the U-net model.

Referring to FIG. 4B, in this example, the U-net model can extract the semantic features of the original image and the degraded image respectively to obtain the first semantic features of the original image and the second semantic features of the degraded image. In combination with the processing process of the U-net model mentioned above, it can be known that the first semantic features can indicate the final image features of the house in the original image, and the second semantic features can indicate the final image features of the house in the degraded image. Then, the U-net model can obtain the enhancement parameter by calculating the difference between the first semantic features and the second semantic features.

For example, in this example, the U-net model can separate the first semantic features to obtain features of a visual dimension, features of an object dimension, and features of a conceptual dimension; and separate the second semantic features to obtain features of a visual dimension, features of an object dimension, and features of a conceptual dimension. For the features of each dimension, the variance between the feature values of the dimension in the first semantic features and the feature values of the corresponding dimension in the second semantic features is calculated, for example, respectively obtaining a feature variance of the visual dimension, a feature variance of the object dimension, and a feature variance of the conceptual dimension. Further, the feature variance corresponding to each dimension is multiplied by the weight value corresponding to that dimension, respectively obtaining an enhancement factor for the visual dimension, an enhancement factor for the object dimension, and an enhancement factor for the conceptual dimension. In this example, the sum of the enhancement factor for the visual dimension, the enhancement factor for the object dimension, and the enhancement factor for the conceptual dimension is the enhancement parameter.

Afterwards, the U-net model can enhance the second semantic features according to the enhancement parameter to obtain the target image, which will not be repeated here.

It should be understood that the embodiments illustrated in FIG. 4A and FIG. 4B are introduced by taking the degradation algorithm and the U-net model as examples, and do not constitute a limitation on the image preprocessing network of the present application. In other embodiments of the present application, the image preprocessing network may include other algorithm models or combined networks with the same or similar functions, and the image preprocessing network may also include more algorithm models than shown in the figures. It will be apparent to those of ordinary skill in the art that many modifications and variations are possible according to the above teachings.

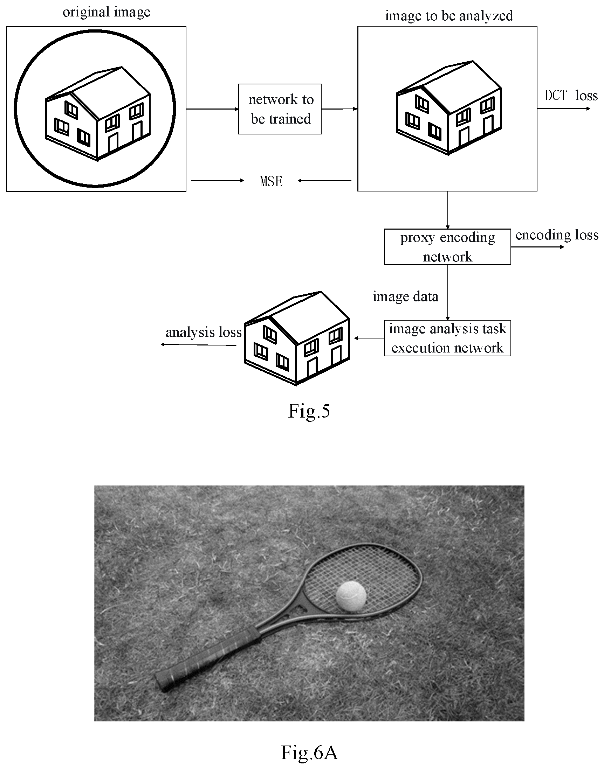

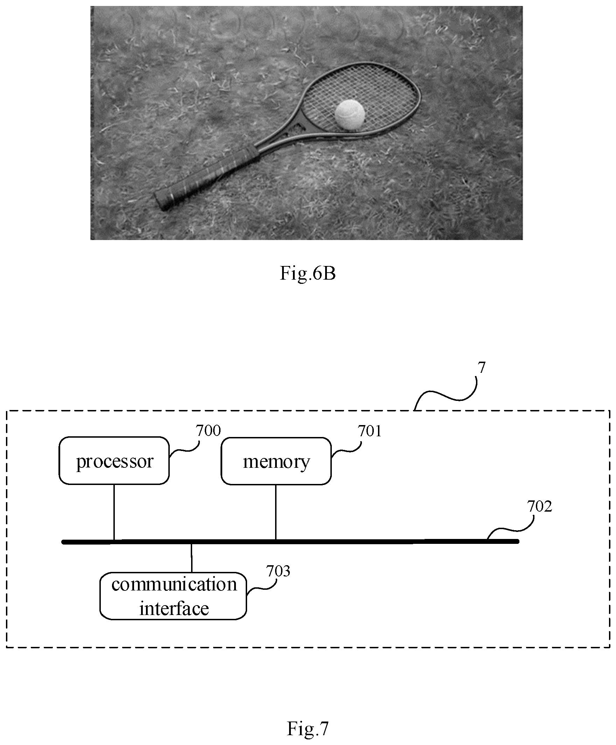

In summary, the technical solutions of the embodiments of the present application achieve the effect of reducing the bit rate of the original image on the basis of not reducing the intensity of the semantic features of the original image by comprehensively reducing the sharpness of the original image and then enhancing the semantic feature part in the image in a targeted manner. As shown in the effect comparison diagrams of FIG. 6a and FIG. 6b, wherein FIG. 6a is the original image. In FIG. 6a, both the grass and the racket are relatively clear, indicating that the bit rates of the grass and the racket are both relatively high. FIG. 6b is the image after processing FIG. 6a by the technical solution of the present application. The racket in FIG. 6b is still relatively clear, while the grass is relatively blurry, that is, the bit rate of the grass part is reduced. It can be seen that this is beneficial to reducing the amount of computation and saving costs. Moreover, preprocessing is performed oriented to the semantic feature aspect of the image, so that the target image can be used as an input image of the image processing neural network, and it is beneficial to maintaining the analytical performance of the image processing neural network at a preferable level.

In combination with the foregoing description, the image preprocessing network used to execute the image preprocessing method for machine vision of the embodiment of the present application can be obtained by training a network to be trained using a proxy neural network, and further, can be connected with the image processing neural network to obtain the CV-oriented analysis system as shown in FIG. 1. The proxy neural network is a neural network configured to execute the image analysis task of the aforementioned CV network.

In some embodiments, the part of the image preprocessing network used to perform blur processing is usually a preset algorithm, while the part performing the enhancement function is usually a deep learning network. In this example, the network to be trained can be a network model configured to perform the enhancement function. For example, the network to be trained is the U-net model to be trained in FIG. 4A and FIG. 4B.

In addition, it should be noted that since the image preprocessing network can be independent of the image processing neural network, in some embodiments, the network to be trained may be a pre-constructed initial network; in other embodiments, the network to be trained may be a to-be-trained preprocessing network, which refers to being applicable to another image analysis task, and the another image analysis task is different from the image analysis task. When the network to be trained is the to-be-trained preprocessing network, before training the network to be trained using the proxy neural network to obtain the image preprocessing network, the network to be trained can also be disconnected from the original image processing neural network. The original image processing neural network here is the image processing neural network that is configured to execute the another image analysis task.

Wherein, training the network to be trained using the proxy neural network to obtain the image preprocessing network may include: causing the network to be trained to preprocess a sample image, wherein the preprocessed image is an image to be analyzed, and then causing the proxy neural network to execute the image analysis task on the image to be analyzed to obtain a predicted analysis result. Calculating a loss value and determining whether the loss value converges, wherein the loss value includes a preprocessing loss, an analysis loss, and a proxy loss. When the loss value converges, taking the network to be trained as the image preprocessing network; when the loss value does not converge, adjusting parameters of the network to be trained, taking the model with adjusted parameters as a new network to be trained, and repeating the step of causing the network to be trained to preprocess a sample image.

Exemplarily, adjusting parameters of the network to be trained may be adjusting parameters of the to-be-trained enhancement model, for example, adjusting parameters of the U-net model to be trained.

In some embodiments, the preprocessing loss is used to represent a loss between the image to be analyzed and the sample image, for example, it can be implemented as the Mean Square Error (MSE) between the image to be analyzed and the sample image to constrain enhancement deviation. The analysis loss is used to represent a loss between the predicted analysis result and the annotated result of the sample image. The proxy loss is used to represent a loss in the process of processing the sample image by the proxy neural network.

It should be noted that the arithmetic function included in the proxy loss can be related to the processing process of the proxy neural network. For example, if the proxy neural network includes a proxy encoding network and an execution network for the image analysis task, the proxy loss may include an encoding loss and a Discrete Cosine Transform (DCT) loss. The encoding loss is used to represent a bit rate loss between encoded data and data before encoding, and the DCT loss is used to represent an encoding complexity loss.

Taking the proxy neural network including a proxy encoding network and an execution network for the image analysis task as an example, an image preprocessing network training system is shown in FIG. 5. Referring to FIG. 5, the image preprocessing network training system includes a network to be trained, a proxy encoding network, and an execution network for the image analysis task.

During the training process, the sample image is input into the network to be trained, and after being processed by the network to be trained, the image to be analyzed is obtained. Further, the MSE between the image to be analyzed and the sample image can be calculated and used as the preprocessing loss of the network to be trained, and the image to be analyzed is input into the proxy encoding network. Afterwards, the proxy encoding network is caused to estimate the DCT loss and encoding loss of the image to be analyzed, and the proxy encoding network is caused to encode the image to be analyzed to obtain encoded image data. Further, the image data is input into the image analysis task execution network to cause the image analysis task execution network to execute the image analysis task on the image data, and after obtaining the analysis result, the analysis loss is calculated.

Further, the sum of the MSE, the DCT loss, the encoding loss, and the analysis loss is taken as the loss value of the current round of training. If the loss value converges, the network to be trained can be used as the image preprocessing network corresponding to the image analysis task; otherwise, the parameters of the network to be trained are adjusted, and the above training process is continued until the loss value converges.

It can be seen that, since the image preprocessing network in the embodiment of the present application is a neural network based on deep learning, it can not only be used for an image analysis task oriented to the CV network, but also can be trained using a proxy neural network based on deep learning, so that the image preprocessing network of the technical solution of the present application can be flexibly and widely applied to image analysis tasks in various scenarios.

Corresponding to the above image preprocessing method for machine vision, an embodiment of the present application further provides an image preprocessing apparatus for machine vision. The image preprocessing apparatus can be deployed in the image preprocessing network of the CV-oriented analysis system illustrated in FIG. 1. The image preprocessing apparatus for CV can modularize the functions of the algorithms and enhancement models in the above image preprocessing network by means of software, hardware, or a combination of software and hardware, and can be used to execute the image preprocessing method for machine vision provided in any of the above embodiments.

The apparatus may include: a blur processing module and an enhancement module. Wherein, the blur processing module is configured to perform blur processing on an original image, wherein the processed image is an image to be enhanced, and the sharpness of the image to be enhanced is lower than the sharpness of the original image; the enhancement module is configured to perform enhancement processing on the image to be enhanced, wherein the enhanced processed image is a target image, the intensity of semantic features of the target image is greater than or equal to the intensity of semantic features of the original image, and the target image is used as an input image for a neural network to execute an image analysis task based on the semantic features.

The image preprocessing apparatus provided in the embodiment of the present application and the image preprocessing method for machine vision provided in the embodiment of the present application are based on the same inventive concept and have the same beneficial effects as the method adopted, run, or implemented thereby.

An embodiment of the present application further provides a computer device, which is applied in a CV-oriented analysis system to execute the above image preprocessing method for machine vision. Please refer to FIG. 7, which shows a schematic diagram of a computer device provided by some embodiments of the present application. As shown in FIG. 7, the computer device 7 includes: a processor 700, a memory 701, a bus 702, and a communication interface 703. The processor 700, the communication interface 703, and the memory 701 are connected via the bus 702; the memory 701 stores a computer program that can be run on the processor 700, and when the processor 700 runs the computer program, it executes the image preprocessing method for machine vision provided in any of the foregoing embodiments of the present application.

Herein, the memory 701 may include a high-speed Random Access Memory (RAM), and may also include a non-volatile memory, such as at least one disk memory. Communication connection between the device network element and at least one other network element is realized through at least one communication interface 703 (which may be wired or wireless), and the Internet, a wide area network, a local network, a metropolitan area network, etc. can be used.

The bus 702 may be an ISA bus, a PCI bus, an EISA bus, etc. The bus can be divided into an address bus, a data bus, a control bus, etc. Wherein, the memory 701 is used to store a program, and after receiving an execution instruction, the processor 700 executes the program. The image preprocessing method for machine vision disclosed in any embodiment of the foregoing embodiments of the present application can be applied to the processor 700, or implemented by the processor 700.

The processor 700 may be an integrated circuit chip with signal processing capability. During the implementation process, each step of the above method can be completed by an integrated logic circuit of hardware in the processor 700 or by instructions in the form of software. The above processor 700 may be a general-purpose processor, including a Central Processing Unit (CPU), a Network Processor (NP), etc.; it may also be a Digital Signal Processor (DSP), an Application Specific Integrated Circuit (ASIC), a Field-Programmable Gate Array (FPGA) or other programmable logic devices, discrete gates or transistor logic devices, discrete hardware components. The methods, steps, and logical block diagrams disclosed in the embodiments of the present application can be implemented or executed. The general-purpose processor may be a microprocessor, or the processor may also be any conventional processor, etc. The steps of the methods disclosed in conjunction with the embodiments of the present application can be directly embodied as being executed and completed by a hardware decoding processor, or by a combination of hardware and software modules in the decoding processor. The software module can be located in a mature storage medium in the art such as a random access memory, a flash memory, a read-only memory, a programmable read-only memory, or an electrically erasable programmable memory, a register, etc. The storage medium is located in the memory 701, and the processor 700 reads the information in the memory 701 and completes the steps of the above method in combination with its hardware.

The computer device provided in the embodiment of the present application and the image preprocessing method for machine vision provided in the embodiment of the present application are based on the same inventive concept and have the same beneficial effects as the method adopted, run, or implemented thereby.

An embodiment of the present application further provides a computer-readable storage medium corresponding to the image preprocessing method for machine vision provided in the foregoing embodiments, on which a computer program (i.e., a program product) is stored. When the computer program is executed by a processor, it will execute the image preprocessing method for machine vision provided in any of the foregoing embodiments.

It should be noted that examples of the computer-readable storage medium may also include, but are not limited to, Phase Change Memory (PRAM), Static Random Access Memory (SRAM), Dynamic Random Access Memory (DRAM), other types of Random Access Memory (RAM), Read-Only Memory (ROM), Electrically Erasable Programmable Read-Only Memory (EEPROM), flash memory or other optical or magnetic storage media, which will not be listed one by one here.

The computer-readable storage medium provided in the above embodiments of the present application and the image preprocessing method for machine vision provided in the embodiments of the present application are based on the same inventive concept and have the same beneficial effects as the method adopted, run, or implemented by the application program stored therein.

It should be noted that:
In the specification provided herein, a large number of specific details are described. However, it can be understood that the embodiments of the present application can be practiced without these specific details. In some examples, well-known structures and techniques are not shown in detail in order not to obscure the understanding of this specification.

Similarly, it should be understood that, in the above description of exemplary embodiments of the present application, various features of the present application are sometimes grouped together into a single embodiment, figure, or description thereof for the purpose of streamlining the disclosure and aiding in the understanding of one or more of the various inventive aspects. However, this method of disclosure should not be interpreted as reflecting an intention that the claimed application requires more features than are expressly recited in each claim. Rather, as the following claims reflect, inventive aspects lie in less than all features of a single foregoing disclosed embodiment. Therefore, the claims following the Detailed Description are hereby expressly incorporated into this Detailed Description, with each claim standing on its own as a separate embodiment of this application.

Furthermore, those skilled in the art can understand that, although some embodiments described herein include certain features included in other embodiments but not other features, combinations of features of different embodiments are meant to be within the scope of the present application and form different embodiments. For example, in the following claims, any of the claimed embodiments can be used in any combination.

The above descriptions are only preferred specific implementations of the present application, but the protection scope of the present application is not limited thereto. Any changes or replacements that can be easily conceived by any person skilled in the art within the technical scope disclosed in the present application should be covered within the protection scope of the present application. Therefore, the protection scope of the present application should be based on the protection scope of the claims.

## Claims

1. An image preprocessing method for machine vision, comprising:
performing blur processing on an original image to generate an image to be enhanced, wherein a sharpness of the image to be enhanced is lower than a sharpness of the original image;
**characterized by** further comprising:
performing enhancement processing on semantic features of the image to be enhanced to generate a target image; and
inputting the target image into an image processing neural network to trigger the image processing neural network to execute an image analysis task based on the semantic features of the target image.

2. The method according to claim 1, wherein performing enhancement processing on semantic features of the image to be enhanced to generate a target image comprises:
generating an enhancement parameter according to the original image and the image to be enhanced, wherein the enhancement parameter indicates an enhancement degree for the image to be enhanced; and
performing enhancement processing on the semantic features of the image to be enhanced according to the enhancement parameter to generate the target image.

3. The method according to claim 2, wherein generating an enhancement parameter according to the original image and the image to be enhanced comprises:
generating a residual image between the original image and the image to be enhanced;
extracting semantic features of the original image to obtain first semantic features, and extracting features of the residual image; and
obtaining the enhancement parameter by performing feature fusion on the first semantic features and the features of the residual image.

4. The method according to claim 2, wherein generating an enhancement parameter according to the original image and the image to be enhanced comprises:
extracting semantic features of the original image to obtain first semantic features, and extracting semantic features of the image to be enhanced as second semantic features, wherein the first semantic features and the second semantic features each comprise features of at least two dimensions;
for the features of each dimension, calculating a difference value between the feature of the dimension in the first semantic features and the feature of the dimension in the second semantic features to obtain at least two difference values; and
calculating the enhancement parameter according to the at least two difference values.

5. The method according to claim 4, wherein calculating the enhancement parameter according to the at least two difference values comprises:
for each difference value, multiplying the difference value by a weight assigned to the difference value, wherein a multiplication result is an enhancement factor corresponding to the difference value, so as to obtain at least two enhancement factors;
wherein the weight indicates an enhancement degree for the features of the dimension corresponding to the difference value; and
calculating a sum of the at least two enhancement factors, wherein the sum is the enhancement parameter.

6. The method according to any one of claims 3 or 4, wherein extracting semantic features of the original image to obtain first semantic features comprises:
extracting global semantic features of the original image;
performing at least one dimensionality reduction process on the global semantic features to obtain initial image features of a target object, wherein the target object is an object associated with the image analysis task of the image processing neural network; and
performing at least one dimensionality increase process on the initial image features to obtain the first semantic features.

7. The method according to claim 6, wherein performing at least one dimensionality increase process on the initial image features comprises:
performing upsampling on the initial image features;
concatenating the upsampled features with dimensionality-reduced features of the same size, wherein the dimensionality-reduced features of the same size are features of the same size as the upsampled features obtained during the at least one dimensionality reduction process;
when a size of the concatenated features is identical to a size of the global semantic features, designating the concatenated features as the first semantic features; and
when the size of the concatenated features is smaller than the size of the global semantic features, designating the concatenated features as new initial image features, and performing upsampling on the new initial image features.

8. The method according to claim 1, wherein performing blur processing on the original image comprises:
performing blur processing on the original image by one of:
adding noise to the original image, performing degradation processing on the original image, or performing blur processing on the original image using an image blur algorithm.

9. The method according to claim 8, wherein performing degradation processing on the original image comprises:
performing downsampling on the original image according to a preset sampling magnification; and
performing upsampling on the downsampled image according to the preset sampling magnification, wherein the upsampled image is an image obtained by the degradation processing.

10. The method according to claim 9, further comprising:
when a resolution in at least one of a width and a height direction of the original image is greater than or equal to a preset value, setting the preset sampling magnification as a first preset sampling magnification; and
when the resolution in both the width and the height directions of the original image is less than the preset value, setting the preset sampling magnification as a second preset sampling magnification;
wherein the first preset sampling magnification is greater than the second preset sampling magnification.

11. The method according to claim 1, further comprising:
training a network to be trained using a proxy neural network to obtain an image preprocessing network, wherein the proxy neural network is configured to execute the image analysis task; the image preprocessing network is configured to execute the image preprocessing method for machine vision, and the image preprocessing network is a deep learning network; and
establishing a connection between the image preprocessing network and the image processing neural network.

12. The method according to claim 11, wherein training a network to be trained using a proxy neural network to obtain an image preprocessing network comprises:
causing the network to be trained to preprocess a sample image, wherein the preprocessed image is an image to be analyzed;
causing the proxy neural network to execute the image analysis task on the image to be analyzed to obtain a predicted analysis result;
calculating a loss value, wherein the loss value comprises a preprocessing loss, an analysis loss, and a proxy loss; the preprocessing loss represents a loss between the image to be analyzed and the sample image, the analysis loss represents a loss between the predicted analysis result and an annotated result of the sample image, and the proxy loss represents a loss associated with processing the sample image by the proxy neural network;
determining whether the loss value converges;
when the loss value converges, designating the network to be trained as the image preprocessing network; and
when the loss value does not converge, adjusting parameters of the network to be trained, designating a model with adjusted parameters as a new network to be trained, and repeating the step of causing the network to be trained to preprocess a sample image.

13. The method according to claim 12, wherein the proxy neural network comprises a proxy encoding network and an execution network for the image analysis task, and causing the proxy neural network to execute the image analysis task on the image to be analyzed to obtain a predicted analysis result comprises:
causing the proxy encoding network to encode the image to be analyzed, and obtaining an encoding loss and a discrete cosine transform (DCT) loss, wherein the proxy loss comprises the encoding loss and the DCT loss, the encoding loss represents a bit rate loss between encoded data and data before encoding, and the DCT loss represents an encoding complexity loss; and
causing the execution network to execute the image analysis task on the encoded image data, and obtaining the analysis loss.

14. The method according to any one of claims 12 or 13, wherein the network to be trained comprises a blur algorithm module and a to-be-trained enhancement model, and adjusting parameters of the network to be trained comprises:
adjusting parameters of the to-be-trained enhancement model.

15. The method according to claim 1, further comprising, after inputting the target image into the image processing neural network:
causing the image processing neural network to encode the target image to obtain encoded data; and
causing an analysis module of the image processing neural network to execute the image analysis task on the encoded data, to output an analysis result by analyzing the semantic features of the target image.

16. The method according to claim 11, wherein the network to be trained is a pre-constructed initial network or a to-be-trained preprocessing network, wherein the to-be-trained preprocessing network is configured for another image analysis task different from the image analysis task; and
when the network to be trained is the to-be-trained preprocessing network, the method further comprises, prior to training a network to be trained using a proxy neural network to obtain an image preprocessing network:
disconnecting the network to be trained from an original image processing neural network, wherein the original image processing neural network is an image processing neural network configured to execute the another image analysis task.

17. The method according to claim 16, wherein the image analysis task comprises at least one of: image matching, image recognition, image segmentation, image content extraction, or face recognition.

18. An image preprocessing apparatus for machine vision, comprising:
a blur processing module, configured to perform blur processing on an original image to generate an image to be enhanced, wherein a sharpness of the image to be enhanced is lower than a sharpness of the original image;
an enhancement module, configured to perform enhancement processing on semantic features of the image to be enhanced to generate a target image; and
an inputting module, configured to input the target image into an image processing neural network to trigger the image processing neural network to execute an image analysis task based on the semantic features of the target image.

19. A computer device, comprising a memory, a processor, and a computer program stored in the memory and executable on the processor, wherein the processor, when executing the computer program, implements the method according to any one of claims 1 to 17.

20. A computer-readable storage medium having a computer program stored thereon, wherein the program, when executed by a processor, implements the method according to any one of claims 1 to 17.
